# FASCICULE DE BREVET EUROPEEN

(11) **EP 4 159 501 B1**
(45) Date de publication et mention de la délivrance du brevet: **03.09.2025**
(21) Numéro de dépôt: 22199134.2
(22) Date de dépôt: 30.09.2022
(51) Int. Cl.: B60J 5/10

(54) **OUVRANT DE VÉHICULE AUTOMOBILE MUNI D'UNE PLATINE DE SUPPORT D ÉQUIPEMENTS ET D'UNE PEAU AMOVIBLE**
KRAFTFAHRZEUG-FLÜGEL MIT EINER AUSRÜSTUNGSTRÄGERPLATTE UND EINER ABNEHMBAREN HAUT
OPENING PANEL FOR A MOTOR VEHICLE PROVIDED WITH A PLATE FOR SUPPORTING EQUIPMENT AND A REMOVABLE SKIN

(30) Priorité: 01.10.2021 FR 2110436
(43) Date de publication de la demande: 05.04.2023
(73) Titulaire: OPmobility SE, 69007 Lyon (FR)
(72) Inventeur: LETERRIER, Franck, 01150 SAINTE-JULIE (FR); COUDRON, Philippe, 01150 SAINTE-JULIE (FR)
(74) Mandataire: LLR

(56) Documents cités:
- DE-A1- 102020 214 355
- FR-A1- 3 038 575
- US-A1- 2018 186 220
- US-B2- 10 220 688

## Description

L'invention concerne le domaine des pièces de carrosserie de véhicule automobile, plus spécifiquement des ouvrants, tels que des hayons ou des portes latérales, et en particulier l'intégration d'équipements qui y sont implantés.

Par exemple, un hayon de véhicule automobile comprend en général un panneau extérieur (aussi appelé peau extérieure) rapporté sur un panneau intérieur, ou cadre. Le panneau intérieur est muni d'une première ouverture dans la partie supérieure du hayon destinée à accueillir une lunette. Dans la partie inférieure du hayon, ce panneau intérieur est généralement pourvu de petits évidements permettant un passage local pour la fixation de composants.

Le document US 10,220,688 B2 décrit un hayon avec un panneau extérieur rapporté sur un panneau intérieur muni d'une telle première ouverture. L'ouvrant comprend une platine de support d'au moins un équipement.

Sur la plupart des véhicules, les hayons de véhicule automobile intègrent, en partie inférieure du hayon, des feux arrière latéraux de signalisation, tels que des feux stop, en général un feu gauche et un feu droit situés de façon symétrique de part et d'autre du hayon. De préférence, ces deux feux sont situés le plus possible le long des bords latéraux du hayon afin de faire face, en position fermée du hayon, au complément de feu arrière situé sur la caisse du véhicule. De tels feux sont à l'heure actuelle fabriqués par des fournisseurs sous forme de blocs d'éclairage ou blocs optiques. De tels blocs optiques comprennent une partie arrière, ou boîtier, dans lequel est disposé le dispositif d'éclairage, ainsi qu'une vitre, également appelée verrine, laissant passer la lumière quand le feu est en fonctionnement. Ces deux feux latéraux sont rapportés et montés sur le hayon sur et par sa face extérieure, ce qui présente de nombreux inconvénients.

En premier lieu, il est nécessaire de prévoir une verrine étanche par rapport au boîtier optique afin de protéger le dispositif d'éclairage. De plus, il convient pour un opérateur d'effectuer le montage des deux feux latéraux à deux endroits distincts du hayon, d'y raccorder des faisceaux électriques, et de rendre le montage étanche pour éviter que de l'eau de ruissellement ne puisse pénétrer au sein du volume délimité par le panneau intérieur et la peau extérieure du hayon, en passant entre le feu et la peau extérieure, ce qui présente des difficultés pratiques.

Un autre inconvénient réside dans le fait que les feux latéraux ainsi rapportés apparaissent comme des ajouts et ne présentent pas de continuité apparente avec le reste du hayon, ce qui nuit à son esthétique. En effet, une tendance chez les constructeurs automobiles est de faire en sorte que les différentes surfaces extérieures du véhicule soient affleurantes les unes avec les autres (« flush » en terminologie anglo-saxonne) et apparaissent sans discontinuités (« seamless » en terminologie anglo-saxonne »). Dans certaines configurations, des éléments lumineux peuvent même demeurer partiellement ou totalement invisibles de l'extérieur, par exemple quand ils ne sont pas activés (« hidden until lit » en terminologie anglo-saxonne).

Enfin, les feux latéraux rapportés présentent le désavantage de ne pas être facilement démontables. En effet, la plupart du temps, la peau extérieure du hayon est collée sur le panneau intérieur de façon définitive pour assurer l'étanchéité entre ces deux éléments. Il devient dès lors nécessaire, pour accéder aux feux latéraux, de passer par l'intérieur du véhicule à travers des orifices pratiqués à cet effet dans le panneau intérieur. Ceci présente plusieurs inconvénients. Le fait de pratiquer des orifices réduit la rigidité du panneau, et ce d'autant que les orifices doivent être assez grands pour pouvoir retirer les feux et leur connectique. De plus, ils doivent pouvoir être refermés pour être cachés et/ou éviter l'insertion de liquide à l'aide de couvercles spécifiques, ce qui complique la conception du hayon.

L'invention a notamment pour but de remédier à ces inconvénients en fournissant un ouvrant de véhicule automobile permettant d'intégrer dans sa partie inférieure des équipements, de façon étanche et permettant d'améliorer l'esthétique du véhicule, et donnant facilement accès à ces équipements.

À cet effet, l'invention concerne un ouvrant de véhicule automobile comprenant :
- un panneau intérieur, de préférence en matière plastique, muni d'une partie supérieure dans laquelle est pratiquée une première ouverture destinée à accueillir une lunette, et
- une peau extérieure, au moins partiellement en matière plastique, rapportée sur le panneau intérieur, comprenant une surface interne située en regard d'une surface externe du panneau intérieur.

L'ouvrant selon l'invention comprend en outre une platine de support d'au moins un équipement recouverte par la peau extérieure, la surface interne de la peau extérieure étant rapportée directement sur la platine de support de manière étanche, ladite platine étant disposée à l'intérieur d'un volume délimité, d'une part, par la surface externe d'un panneau intérieur et, d'autre part, par la surface interne de la peau extérieure, la peau extérieure étant rapportée directement et fixée de manière amovible sur le panneau intérieur ou sur la platine de support.

On entend par surface externe du panneau intérieur la surface tournée vers l'extérieur du véhicule. La surface externe est opposée à la surface interne, qui est quant à elle tournée vers l'habitacle.

On entend qu'un premier élément est « rapporté sur » un deuxième élément par le fait que le premier élément soit disposé en regard du deuxième élément en le recouvrant au moins en partie, qu'il lui soit fixé ou non.

On entend qu'un premier élément est « rapporté directement sur » un deuxième élément par le fait que le premier élément soit rapporté sur le deuxième élément et que les éventuels moyens de fixation qui lient les deux éléments soient disposés directement sur ces deux éléments, sans pièce structurelle intermédiaire telle qu'un autre panneau par exemple. En outre, selon cette définition un premier élément est directement rapporté sur un deuxième élément y compris si des moyens de fixation (vis, rondelle, colle, etc.) d'étanchéité (joint, mousse, etc.), de décoration (film, peinture, etc.) et/ou d'isolation (mousse, etc.) sont disposés entre le premier élément et le deuxième élément.

Grâce à la présence d'une platine de support d'équipements qui est recouverte par la peau extérieure et sur laquelle la peau extérieure est rapportée de manière étanche, mais qui est également disposée à l'intérieur un volume délimité, d'une part, par la surface externe d'un panneau intérieur et, d'autre part, par la surface interne de la peau extérieure, il est possible de faire porter des dispositifs lumineux, de communication ou d'aide à la conduite par la platine de support d'équipements plutôt que de les rapporter en face externe de la peau extérieure de l'ouvrant. Cela facilite leur implémentation au sein de l'ouvrant à la position désirée pour chaque équipement, puisqu'ils sont préalablement assemblés sur la platine sur laquelle est ensuite rapportée à la peau extérieure.

Ainsi, l'esthétique du véhicule est améliorée puisque les équipements n'apparaissent pas comme des ajouts et ne présentent pas de discontinuité apparente avec le reste de l'ouvrant.

En outre, il est également possible de faire en sorte que les équipements portés par la platine de support soient dissimulés par la peau extérieure, y compris, dans le cas d'un hayon, les feux arrière par exemple lorsqu'ils ne sont pas allumés. Par « dissimulés par la peau extérieure » on entend que les équipements ne sont pas visibles pour un utilisateur de manière évidente.

De plus, le fait que la peau extérieure soit rapportée directement de manière étanche sur la platine de support d'équipements permet de créer une « zone sèche » spécifique pour les équipements portés par la platine de support. On entend ici par « zone sèche » un volume fermé, étanche par rapport à l'environnement extérieur. Ainsi, tous les équipements portés par la platine de support sont isolés de façon étanche de l'environnement extérieur via la liaison étanche obtenue entre la platine de support et la peau extérieure. Ceci est beaucoup plus aisé que d'assurer l'étanchéité autour de chaque équipement individuellement ou de rendre chaque épiquement étanche, comme pour les blocs d'éclairage. Cela permet *in fine* de préserver ces équipements et donc d'assurer leur bon fonctionnement.

Enfin, le fait que la peau extérieure soit rapportée directement et fixée de manière amovible directement sur le panneau intérieur et/ou sur la platine de support rend particulièrement aisé la réparation et/ou le remplacement de l'équipement porté par la platine. En effet, il suffit de détacher la peau du reste du hayon pour accéder à l'équipement et toute sa connectique.

Avantageusement, afin d'accéder facilement à l'équipement porté par la platine de support, la peau extérieure est configurée de sorte à pouvoir être détaché du panneau intérieur et/ou de la platine puis à en être écartée vers l'extérieur du véhicule. Il n'est en effet plus nécessaire de retirer l'équipement du véhicule à travers le panneau intérieur depuis l'intérieur du véhicule, ce qui facilite grandement sa maintenance, son remplacement et d'une manière générale le service après-vente.

Selon un mode de réalisation préféré de l'invention, la surface interne de la peau extérieure est rapportée directement et fixée sur la surface extérieure du panneau intérieur de sorte que la peau extérieure puisse être détachée du panneau intérieur de manière amovible, par exemple par vissage. Ceci permet de faciliter le démontage de la peau extérieure puisqu'il n'y a pas de pièce intermédiaire à démonter entre le panneau intérieur et la platine de support.

Selon un mode de réalisation particulier de l'invention, la platine de support d'équipement comprend une niche dont les parois délimitent un volume dans lequel est inséré ledit au moins un équipement et un rebord périphérique prolongeant les parois de la niche. Le volume délimité par la niche peut ainsi former une « zone sèche » pour les équipements.

Selon un mode de réalisation particulier de l'invention, la platine de support d'équipement est rapportée directement et fixée sur la surface externe du panneau intérieur par collage.

Selon un autre mode de réalisation particulier de l'invention, la platine de support d'équipement est rapportée directement et fixée sur la surface externe du panneau intérieur, de manière amovible, par exemple par vissage.

De manière à assurer une étanchéité dans le volume délimité par la niche de la platine de support et donc protéger l'équipement qui se trouve dans ce volume, un joint d'étanchéité est disposé entre la platine de support et la surface interne de la peau extérieure.

De préférence, la platine de support d'équipements comprend un dispositif émetteur et/ou récepteur d'un rayonnement électromagnétique et la peau extérieure comprend, en regard du dispositif émetteur et/ou récepteur de rayonnement électromagnétique, une zone de transmission, en matière plastique, qui est au moins partiellement transparente audit rayonnement électromagnétique. On peut ainsi profiter de la platine de support pour disposer des dispositifs émetteurs de rayonnement dans le but d'établir par exemple une signature lumineuse continue sur toute la largeur du hayon si cela est désiré, ou encore y intégrer des dispositifs d'aide à la conduite, comme par exemple des radars (qui émettent généralement un rayonnement électromagnétique compris entre 20 et 80 GHz), des lidars (qui émettent généralement un rayonnement électromagnétique appartenant au spectre infrarouge) ou des caméras de recul. Enfin, il peut également s'agir d'équipement de communication, tels que des écrans ou des antennes. De façon générale, ces équipements peuvent être tout dispositif nécessitant une transparence aux ondes.

Selon un mode de réalisation particulier de l'invention, le rayonnement électromagnétique appartient au spectre visible.

Selon un autre mode de réalisation de l'invention, le rayonnement électromagnétique appartient au spectre non visible.

Afin de d'accéder facilement à l'équipement porté par la platine de support sans avoir à détacher la peau extérieure de la platine de support, la platine de support comprend au moins un orifice d'accès à un des équipements portés par la platine de support, et de préférence au moins un organe de fermeture dudit orifice d'accès.

Selon un mode de réalisation particulier de l'invention, la platine de support est monobloc.

Selon un autre mode de réalisation de l'invention, la platine de support est réalisée en plusieurs parties assemblées entre elles. On pourra notamment prévoir qu'elle soit munie d'un orifice recouvert par des moyens de fermeture amovibles permettant d'accéder aux équipements.

De préférence, afin notamment de pouvoir assurer une transparence de la peau à divers rayonnement électromagnétiques selon les besoins, la peau extérieure est réalisée dans une des matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- polyméthacrylate de méthyle (PMMA) ;
- copolymère de cyclo-oléfine (COC) ;
ainsi que toute combinaison de ces matières.

Selon un autre mode de réalisation de l'invention, l'ouvrant constitue un hayon ou une porte latérale.

### Brève description des figures

L'invention sera mieux comprise à la lecture de la description qui va suivre, dans laquelle l'ouvrant de l'invention a été décrit sous la forme d'un hayon, description donnée uniquement à titre d'exemple et faite en se référant aux dessins annexés dans lesquels :
[Fig. 1] la figure 1 est un ensemble de vues schématiques (figure 1A en éclaté et 1B en assemblé) d'une platine de support d'équipement et d'une peau extérieure d'un hayon selon un mode de réalisation de l'invention,
[Fig. 2] la figure 2 est une vue schématique éclatée d'un hayon selon un premier mode de réalisation de l'invention,
[Fig. 3] la figure 3 est une vue schématique du hayon de la figure 2,
[Fig. 4] la figure 4 est une coupe schématique réalisée selon le plan de coupe IV-IV de la figure 3,
[Fig. 5] la figure 5 est une coupe schématique de la platine d'équipement et de l'équipement de la figure 4, la peau ayant été retirée du hayon,
[Fig. 6] la figure 6 est une vue similaire à la figure 4 d'un hayon selon un deuxième mode de réalisation,
[Fig. 7] la figure 6 est une vue similaire à la figure 5 d'un hayon selon un deuxième mode de réalisation.

### Description détaillée

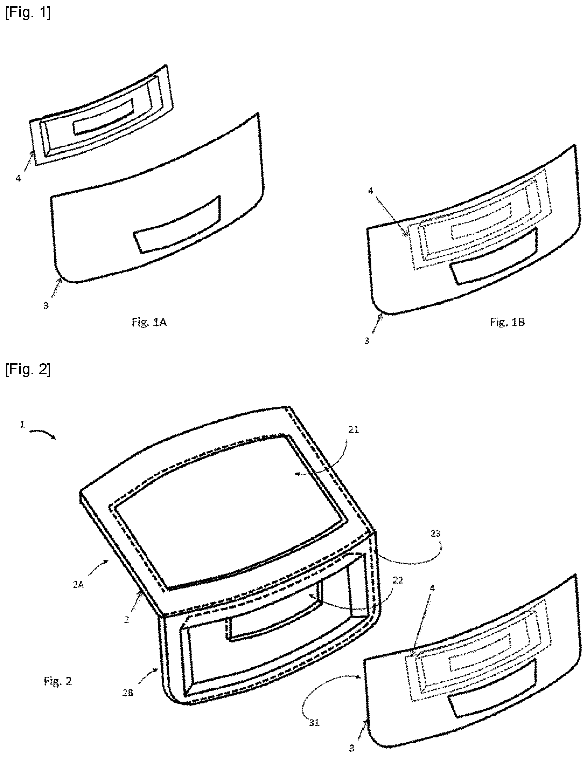

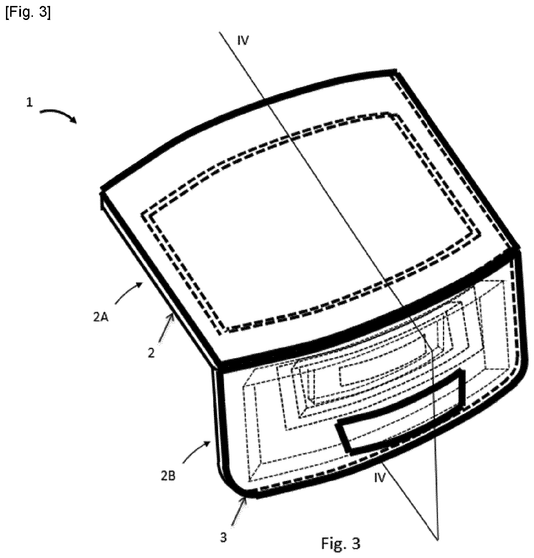

On a représenté sur les figures 1 à 4 un hayon de véhicule automobile 1 selon un premier mode de réalisation de l'invention. Le véhicule automobile n'est pas représenté sur les figures.

Le hayon 1, comme on peut le voir notamment à la figure 2, comprend un panneau intérieur 2, de préférence en matière plastique, muni d'une partie supérieure 2A dans laquelle est pratiquée une première ouverture 21 destinée à accueillir une lunette 7. La lunette 7 est notamment fixée au panneau intérieur 2 via un cordon de colle 8.

Le hayon 1 comprend également une peau extérieure 3, au moins partiellement en matière plastique, rapportée sur le panneau intérieur 2, comprenant une surface interne 31 située en regard d'une surface externe 23 du panneau intérieur 2. On entend par surface externe 23 du panneau intérieur la surface tournée vers l'extérieur du véhicule. La surface externe 23 est opposée à une surface interne 24 du panneau extérieur, qui est quant à elle tournée vers l'habitacle.

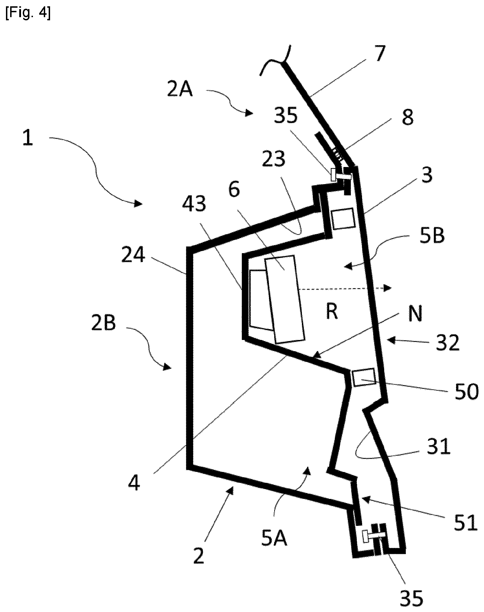

Comme on peut le voir à la figure 4, le hayon 1 comprend en outre une platine de support 4 d'au moins un équipement 6. La surface interne 31 de la peau extérieure 3 est rapportée directement sur la platine de support 4 de manière étanche.

La peau extérieure 3 est rapportée directement sur le panneau intérieur 2 de manière amovible.

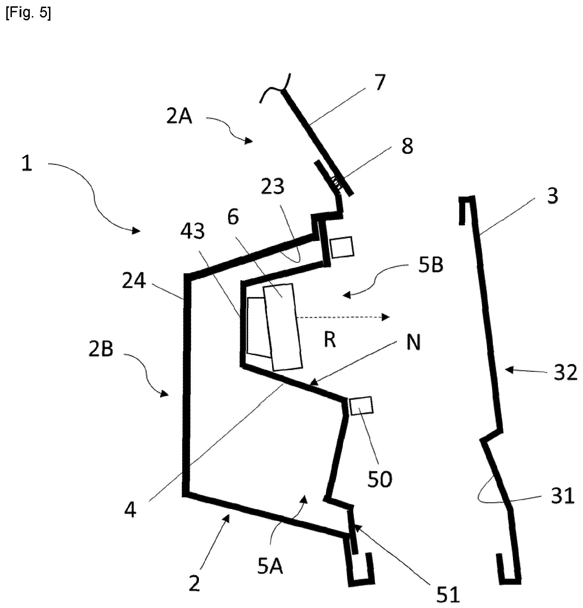

Plus précisément la peau extérieure 3 est configurée de sorte à pouvoir être détachée du panneau intérieur 2 depuis l'intérieur du véhicule (gauche des figures 4 et 5 vers l'extérieur (droite des figures 4 et 5) du véhicule, comme on l'expliquera plus loin.

La platine de support 4 est rapportée directement sur le panneau intérieur 2. Par exemple, la platine de support 4 peut être collée sur le panneau intérieur 2.

Plus précisément, dans l'exemple représenté sur les figures, la platine de support 4 est rapportée directement sur la surface externe 23 du panneau intérieur 2 et y est fixée, ici par collage (la colle n'est pas visible sur les figures).

La platine de support 4 comprend une niche N dont les parois délimitent un volume 5B dans lequel est logé ledit au moins un équipement 6, ainsi qu'un rebord périphérique 51 prolongeant les parois de la niche N.

L'étanchéité du volume 5B est assurée grâce à un joint d'étanchéité 50 périphérique disposé entre la platine de support 4 et la surface interne de la peau extérieure 3. Il peut notamment s'agir d'un joint d'étanchéité en mousse comprimé entre le rebord périphérique 51 de la platine de support 4 et la surface interne 31 de la peau extérieure 3. Le joint d'étanchéité 50 pourra notamment être porté par la platine de support 4 une fois la peau extérieure 3 détachée de celle-ci comme illustré à la figure 5. Dans une variante, le joint d'étanchéité 50 pourra être porté par la peau extérieure 3.

La platine 4 est fixée à la surface externe 23 du panneau intérieur 2. Pour cela, le rebord périphérique 51 de la platine 4 est assemblé à la surface externe 23 du panneau intérieur par exemple par collage. D'autres moyens de fixation peuvent être envisagés. La fixation, telle que le collage, peut être également réalisée dans une autre zone que le rebord périphérique de la platine 4.

Dans une variante non représentée, la platine de support 4 pourra être assemblée de manière amovible à la surface externe 23 du panneau intérieur 2, notamment à l'aide de vis disposées sur le rebord 51. On entend par amovible un moyen de fixation réversible plusieurs fois sans altérer les pièces, au contraire d'un collage par exemple.

Toutefois, ces vis pourraient être disposées à d'autres endroits que le rebord 51. En particulier, dans encore une autre une variante non représentée, la fixation de la platine de support 4 à la surface externe 23 du panneau intérieur 2 peut être réalisée au niveau d'une des parois de la niche N, hors rebord 51.

On peut naturellement envisager d'autres moyens de fixation que des vis, comme par exemple des clips, du moment qu'ils permettent un retrait de la platine de support 4 du panneau intérieur 2 de manière amovible.

Un joint d'étanchéité (non visible sur les figures) peut également être disposé entre le rebord périphérique 51 et la surface externe 23 du panneau intérieur. Il peut s'agir par exemple d'un joint d'étanchéité en mousse comprimé entre le rebord périphérique 51 et la surface externe 23 du panneau intérieur.

La peau extérieure 3 est fixée, via sa surface intérieure 31, à la surface extérieure 3 au panneau intérieur 3. Ici, elle y est reliée par des vis 35. Dans le mode de réalisation illustré aux figures 4 et 5, les vis 35 sont disposées sur un rebord de la peau extérieure 2 venant en contact avec la surface externe 23 du panneau intérieur 2. Toutefois, ce rebord est optionnel et les vis 35 peuvent être disposées à divers endroits de la surface externe 23 du panneau intérieur 2 et de la surface interne 31 de la peau extérieure 3.

La peau extérieure 3 pourra être rapportée sur la surface externe 23 du panneau intérieur 2 de manière étanche, par exemple à l'aide d'un joint d'étanchéité disposé entre la surface interne 31 de la peau extérieure 3 et la surface externe 23 du panneau intérieur 2 (le joint n'est pas visible sur les figures).

Dans le mode de réalisation représenté sur les figures, il faut, pour détacher la peau extérieure 3 du panneau intérieur 2, dévisser les vis 35 depuis l'intérieur du véhicule (côté habitacle). Puis, on peut retirer la peau extérieure 3 du panneau intérieur 2 depuis l'extérieur du véhicule et la séparer du reste du véhicule, comme on peut le voir à la figure 5 notamment.

La platine de support 4 comprend un ou plusieurs équipements 6 dont un seul est visible sur les coupes représentées 4 et 5. Bien évidemment, ceux-ci peuvent être différents les uns des autres. Il peut s'agir par exemple, d'un ou plusieurs dispositifs lumineux qui émettent un rayonnement électromagnétique R dans le spectre visible. Ce rayonnement électromagnétique est schématisé par une flèche en pointillés sur les figures 4 et 5. Ces dispositifs lumineux peuvent être répartis sur tout ou partie de largeur de la platine de support 4 dans le but d'établir la signature lumineuse désirée. Ainsi, il est possible d'obtenir une signature lumineuse d'aspect continue sur toute la largeur du hayon si cela est désiré.

Le ou les équipements 6 peuvent également être des dispositifs d'aide à la conduite, comme par exemple des radars (qui émettent généralement un rayonnement électromagnétique compris entre 20 et 80 GHz), des lidars (qui émettent généralement un rayonnement électromagnétique appartenant au spectre infrarouge) ou des caméras de recul. Enfin, il peut également s'agir d'équipement de communication, tels que des écrans d'information ou des antennes. De façon générale, le ou les équipements 6 peuvent être tout dispositif nécessitant une transparence aux ondes.

La zone de la peau extérieure 3 située en regard de l'équipement 6 est une zone de transmission 32 en matière plastique au moins partiellement transparente au rayonnement électromagnétique de l'équipement, dans le cas où ce dernier émet et/ou reçoit un rayonnement électromagnétique. Par au « moins transparent au rayonnement électromagnétique », on entend que cette zone de transmission 32 permet le passage d'une quantité d'ondes électromagnétiques suffisante pour que l'équipement puisse remplir la fonction qui lui est dédiée correctement et continuellement. Dans le cas d'un dispositif lumineux, par exemple, cela signifie que la zone de transmission 32 laisse passer les rayons lumineux émis par le dispositif afin que ceux-ci puissent être vus par un observateur extérieur au véhicule.

La peau extérieure 3 est de préférence réalisée dans une des matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- polyméthacrylate de méthyle (PMMA) ;
- copolymère de cyclo-oléfine (COC) ;
ainsi que toute combinaison de ces matières.

La platine de support 4 peut être monobloc ce qui simplifie sa fabrication et évite les étapes d'assemblage de plusieurs éléments sur la peau extérieure 3. Alternativement, la platine de support 4 peut être réalisée de plusieurs parties assemblées entre elles soit avant d'être introduites dans le volume interne 5A, soit après avoir été introduites dans le volume interne 5A.

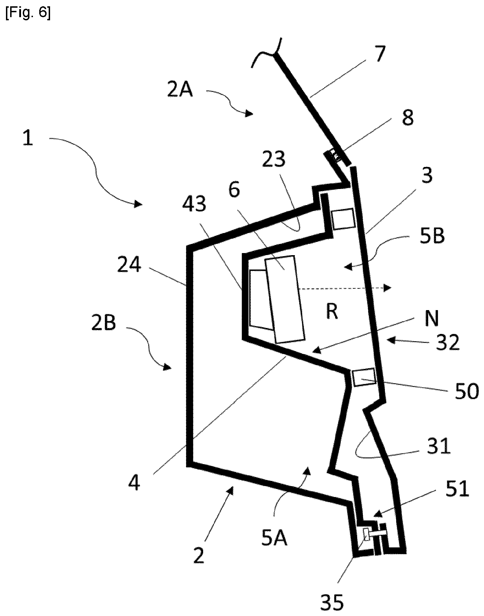

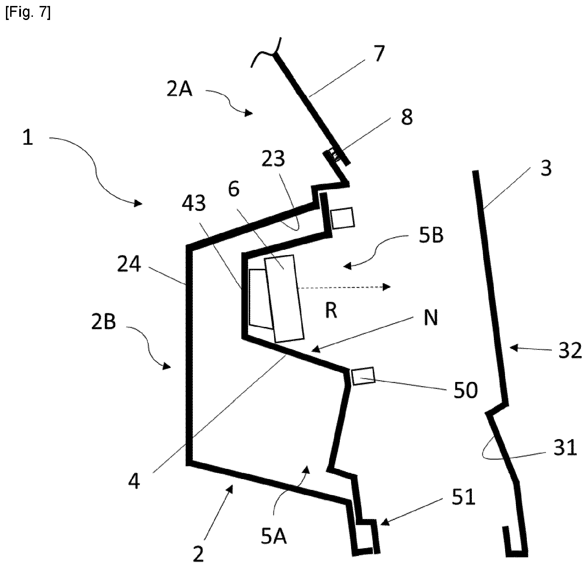

Dans un deuxième mode de réalisation illustré aux figures 6 et 7, la peau extérieure 3 est rapportée directement et fixée de manière amovible sur la platine de support 4 plutôt que sur le panneau intérieur 2. Plus précisément, la peau extérieure 3 est fixée sur une surface externe de la platine de support 4, ici à l'aide de vis 35. Par exemple, la fixation de la peau extérieure 3 se fait au niveau du rebord périphérique de la platine de support 4. Naturellement, d'autre moyens de fixation tels que des clips peuvent être envisagés.

L'invention n'est pas limitée aux modes de réalisation présentés et d'autres modes de réalisation apparaîtront clairement à l'homme du métier.

### Liste de références

1 : hayon
2 : panneau intérieur
2A : partie supérieure du panneau intérieur
2B : partie inférieure du panneau intérieur
3 : peau extérieure
4 : platine de support d'équipement(s)
5A : volume interne de l'ouvrant
5B : volume interne de la platine
6 : équipement de la platine
7 : lunette
8 : cordon de colle lunette
23 : surface externe du panneau intérieur
24 : surface interne du panneau intérieur
31 : surface interne de la peau extérieure
32 : zone de transmission
35 : vis entre la platine de support et le panneau intérieur
42 : orifice d'accès de la platine
43 : organe de fermeture
50 : joint d'étanchéité
51 : rebord de la platine
N : niche de la platine de support
R : rayonnement électromagnétique

## Revendications

1. Ouvrant (1) de véhicule automobile comprenant :
- un panneau intérieur (2), de préférence en matière plastique, muni d'une partie supérieure (2A) dans laquelle est pratiquée une première ouverture (21) destinée à accueillir une lunette (7), et
- une peau extérieure (3), au moins partiellement en matière plastique, rapportée sur le panneau intérieur (2), comprenant une surface interne (31) située en regard d'une surface externe (23) du panneau intérieur (2), et
- une platine de support (4) d'au moins un équipement (6), **caractérisé en ce que** la platine de support (6) est recouverte par la peau extérieure (3), la surface interne (31) de la peau extérieure (3) étant rapportée directement sur la platine de support (4) de manière étanche, ladite platine (4) étant disposée à l'intérieur d'un volume interne (5A) délimité, d'une part, par la surface externe (23) du panneau intérieur (2) et, d'autre part, par la surface interne (31) de la peau extérieure (3),
la peau extérieure (3) étant rapportée directement et fixée de manière amovible sur le panneau intérieur (2) ou sur la platine de support (4).

2. Ouvrant (1) de véhicule automobile selon la revendication 1, dans lequel la peau extérieure (3) est configurée de sorte à pouvoir être détachée du panneau intérieur (2) ou de la platine (4) puis à en être écarté vers l'extérieur du véhicule.

3. Ouvrant (1) de véhicule automobile selon la revendication 1 ou 2, dans lequel la surface interne (31) de la peau extérieure (3) est rapportée directement et fixée sur la surface extérieure (23) du panneau intérieur (2) ou sur la platine (4) de sorte que la peau extérieure (3) puisse être détachée du panneau intérieur (3) de manière amovible

4. Ouvrant (1) de véhicule automobile selon la revendication 3, dans lequel la peau extérieure (3) est fixée à la surface extérieure (23) du panneau intérieur (2) par vissage.

5. Ouvrant (1) de véhicule automobile selon l'une quelconque des revendications précédentes, dans lequel la peau extérieure (3) est rapportée sur une surface externe (23) du panneau intérieur (2) de manière étanche, par exemple à l'aide d'un joint d'étanchéité disposé entre la surface interne (31) de la peau extérieure (3) et la surface externe (23) du panneau intérieur (2)

6. Ouvrant (1) de véhicule automobile selon l'une quelconque des revendications précédentes, dans lequel la platine de support (4) d'équipement comprend une niche (N) dont les parois délimitent un volume (5B) dans lequel est inséré ledit au moins un équipement (4) et un rebord périphérique (51) prolongeant les parois de la niche (N),

7. Ouvrant (1) de véhicule automobile selon l'une quelconque des revendications précédentes, dans lequel la platine de support d'équipement (4) est rapportée directement et fixée sur la surface externe (23) du panneau intérieur (2) par collage.

8. Ouvrant (1) de véhicule automobile selon l'une quelconque des revendications 1 à 7, dans lequel la platine de support d'équipement (4) est rapportée directement et fixée sur la surface externe (23) du panneau intérieur (2), de manière amovible, par exemple par vissage.

9. Ouvrant (1) de véhicule automobile selon l'une quelconque des revendications précédentes, dans lequel un joint d'étanchéité est disposé entre la platine de support (4) et la surface interne de la peau extérieure (3).

10. Ouvrant (1) de véhicule automobile selon l'une quelconque des revendications précédentes, dans lequel la platine de support d'équipements (4) comprend un dispositif (6) émetteur et/ou récepteur d'un rayonnement électromagnétique et la peau extérieure (3) comprend, en regard du dispositif (6) émetteur et/ou récepteur de rayonnement électromagnétique, une zone de transmission (32), en matière plastique, qui est au moins partiellement transparente audit rayonnement électromagnétique.

## Patentansprüche

1. Kraftfahrzeug-Flügel (1) umfassend:
- eine Innentafel (2), bevorzugt aus Kunststoff, die mit einem oberen Teil (2A) versehen ist, in dem eine erste Öffnung (21) hergestellt ist, die zur Aufnahme eines Fensters (7) bestimmt ist, und
- eine Außenhaut (3), wenigstens teilweise aus Kunststoff, die auf der Innentafel (2) angebracht ist und eine Innenfläche (31) umfasst, die einer Außenfläche (23) der Innentafel (2) gegenüber befindlich ist, und
- eine Träger-Platte (4) für wenigstens eine Ausrüstung (6),
**dadurch gekennzeichnet, dass** die Träger-Platte (6) von der Außenhaut (3) bedeckt ist, wobei die Innenfläche (31) der Außenhaut (3) unmittelbar auf der Träger-Platte (4) abdichtend angebracht ist, wobei die Platte (4) im Inneren eines Innenvolumens (5A) angeordnet ist, das, einerseits, durch die Außenfläche (23) der Innentafel (2) und, andererseits, durch die Innenfläche (31) der Außenhaut (3) begrenzt ist,
wobei die Außenhaut (3) auf der Innentafel (2) oder auf der Träger-Platte (4) unmittelbar angebracht und abnehmbar befestigt ist.

2. Kraftfahrzeug-Flügel (1) nach Anspruch 1, wobei die Außenhaut (3) so ausgebildet ist, dass sie von der Innentafel (2) oder der Platte (4) gelöst und anschließend nach außerhalb des Fahrzeugs von ihr abgespreizt werden kann.

3. Kraftfahrzeug-Flügel (1) nach Anspruch 1 oder 2, wobei die Innenfläche (31) der Außenhaut (3) auf der Außenfläche (23) der Innentafel (2) oder auf der Platte (4) so unmittelbar angebracht und befestigt ist, dass die Außenhaut (3) von der Innentafel (3) abnehmbar gelöst werden kann.

4. Kraftfahrzeug-Flügel (1) nach Anspruch 3, wobei die Außenhaut (3) auf der Außenfläche (23) der Innentafel (2) durch Verschrauben befestigt ist.

5. Kraftfahrzeug-Flügel (1) nach einem der vorhergehenden Ansprüche, wobei die Außenhaut (3) auf einer Außenfläche (23) der Innentafel (2) abdichtend angebracht ist, zum Beispiel mittels eines Dichtungselements, das zwischen der Innenfläche (31) der Außenhaut (3) und der Außenfläche (23) der Innentafel (2) angeordnet ist.

6. Kraftfahrzeug-Flügel (1) nach einem der vorhergehenden Ansprüche, wobei die Träger-Platte (4) für Ausrüstung eine Nische (N), deren Wände ein Volumen (5B) begrenzen, in dem die wenigstens eine Ausrüstung (4) eingesetzt ist, und einen umlaufenden Rand (51), der die Wände der Nische (N) verlängert, umfasst.

7. Kraftfahrzeug-Flügel (1) nach einem der vorhergehenden Ansprüche, wobei die Träger-Platte (4) für Ausrüstung auf der Außenfläche (23) der Innentafel (2) unmittelbar angebracht und durch Verkleben befestigt ist.

8. Kraftfahrzeug-Flügel (1) nach einem der Ansprüche 1 bis 7, wobei die Träger-Platte (4) für Ausrüstung auf der Außenfläche (23) der Innentafel (2) unmittelbar angebracht und abnehmbar, zum Beispiel durch Verschrauben, befestigt ist.

9. Kraftfahrzeug-Flügel (1) nach einem der vorhergehenden Ansprüche, wobei ein Dichtungselement zwischen der Träger-Platte (4) und der Innenfläche der Außenhaut (3) angeordnet ist.

10. Kraftfahrzeug-Flügel (1) nach einem der vorhergehenden Ansprüche, wobei die Träger-Platte (4) für Ausrüstung eine Vorrichtung (6) zum Senden und/oder Empfangen einer elektromagnetischen Strahlung umfasst und die Außenhaut (3), der Vorrichtung (6) zum Senden und/oder Empfangen von elektromagnetischer Strahlung gegenüber, eine Übertragungszone (32), aus Kunststoff umfasst, die für die elektromagnetische Strahlung wenigstens teilweise durchlässig ist.

## Claims

1. Motor vehicle opening panel (1) comprising:
- an inner panel (2), preferably made of plastic material, provided with an upper part (2A) in which a first opening (21) is made that is intended to accommodate a rear window (7), and
- an outer skin (3), at least partially made of plastic material, attached to the inner panel (2), comprising an inner surface (31) located opposite an outer surface (23) of the inner panel (2), and
- a support plate (4) for at least one equipment item (6),
**characterized in that** the support plate (4) is covered by the outer skin (3), the inner surface (31) of the outer skin (3) being attached directly to the support plate (4) in a sealed manner,
said plate (4) being arranged inside a volume (5A) delimited, on the one hand, by the outer surface (23) of the inner panel (2) and, on the other hand, by the inner surface (31) of the outer skin (3),
the outer skin (3) being applied directly and fastened removably to the inner panel (2) or to the support plate (4).

2. Motor vehicle opening panel (1) according to claim 1, wherein the outer skin (3) is configured so as to be able to be detached from the inner panel (2) or from the plate (4), then to be moved away from it toward the outside of the vehicle.

3. Motor vehicle opening panel (1) according to claim 1 or 2, wherein the inner surface (31) of the outer skin (3) is applied directly and fastened to the outer surface (23) of the inner panel (2) or to the plate (4) so that the outer skin (3) can be detached from the inner panel (3) in a removable manner

4. Motor vehicle opening panel (1) according to claim 3, wherein the outer skin (3) is fastened to the outer surface (23) of the inner panel (2) by screwing.

5. Motor vehicle opening panel (1) according to any one of the preceding claims, wherein the outer skin (3) is attached to an outer surface (23) of the inner panel (2) in a sealed manner, for example using a seal placed between the inner surface (31) of the outer skin (3) and the outer surface (23) of the inner panel (2)

6. Motor vehicle opening panel (1) according to any one of the preceding claims, wherein the equipment support plate (4) comprises a niche (N) whose walls delimit a volume (5B) in which said at least one equipment item (4) is inserted and a peripheral rim (51) extending the walls of the niche (N).

7. Motor vehicle opening panel (1) according to any one of the preceding claims, wherein the equipment support plate (4) is applied directly and fastened to the outer surface (23) of the inner panel (2) by gluing.

8. Motor vehicle opening panel (1) according to any one of claims 1 to 7, wherein the equipment support plate (4) is applied directly and fastened to the outer surface (23) of the inner panel (2) in a removable manner, for example by screwing.

9. Motor vehicle opening panel (1) according to any one of the preceding claims, wherein a seal is placed between the support plate (4) and the inner surface of the outer skin (3).

10. Motor vehicle opening panel (1) according to any one of the preceding claims, wherein the equipment support plate (4) comprises a device (6) emitting and/or receiving electromagnetic radiation and the outer skin (3) comprises, opposite the device (6) emitting and/or receiving electromagnetic radiation, a transmission zone (32), made of plastic, that is at least partially transparent to said electromagnetic radiation.
